# EUROPÄISCHE PATENTSCHRIFT

(11) **EP 1 432 604 B1**
(45) Veröffentlichungstag und Bekanntmachung des Hinweises auf die Patenterteilung: **11.05.2005**
(21) Anmeldenummer: 02800554.4
(22) Anmeldetag: 24.08.2002
(51) Int. Cl.: B62D 25/00

(54) **TRENNANORDNUNG FÜR FAHRZEUGKAROSSERIE**
SEPARATING DEVICE FOR THE BODYWORK OF A VEHICLE
DISPOSITIF DE SEPARATION POUR CARROSSERIE DE VEHICULE

(30) Priorität: 05.10.2001 DE 10149245
(43) Veröffentlichungstag der Anmeldung: 30.06.2004
(73) Patentinhaber: DaimlerChrysler AG, 70567 Stuttgart (DE)
(72) Erfinder: ERNEY, Thomas, 71034 Böblingen (DE); SEITZ, Daniela, 70567 Stuttgart (DE); SEEFRIED, Johann, 72184 Eutingen (DE)
(74) Vertreter: Rauscher, Steffen, Dr
(86) Internationale Anmeldenummer: PCT/EP2002/009494
(87) Internationale Veröffentlichungsnummer: WO 2003/031251

(56) Entgegenhaltungen:
- EP-A- 0 915 007
- DE-C- 19 843 025
- GB-A- 746 584

## Beschreibung

Die Erfindung betrifft Trennanordnung nach dem Oberbegriff des Anspruchs 1.

Die sogenannte Karosseriesteifigkeit gilt zunehmend als eines der wichtigsten Kriterien für modernen Kraftfahrzeuge. Sie trägt entscheidend zur Sicherheit, Qualitätsanmutung und Komfort bei. Die Erhöhung der Karoseriesteifigkeit ist jedoch oftmals mit einer Erhöhung des Fahrzeuggewichtes verbunden, da mehrere Maßnahmen häufig mit zusätzlichen oder stärkeren Karosseriebauteilen verbunden sind.

Die DE 198 43 025 C1 beschreibt unter Ausnutzung eines standardmäßig eingesetzten Bauteils, einer Tanktrennwand, die Möglichkeit, die Karosseriesteifigkeit bei reduzierter Masse zu erhöhen. Die Trennwand ist eben ausgestaltet und steht nahezu parallel zu einer senkrechten Fahrzeugquerebene. An der Trennwand sind wiederum Winkelelemente und Schienen befestigt, mit denen die Trennanordnung an der Karosserie lösbar befestigt ist. Zusätzlich weist die Trennanordnung kreuzförmige Verstrebungen auf, die auf der Trennanordnung montiert sind oder als U-Profil im Bauteil integriert sind.

Die US 5 195 780 beschreibt eine in etwa Kastenförmige Anordnung, die den Tank umgibt und mit der Karosserie verbunden ist, wobei diese Anordnung ebenfalls zur Versteifung der Karosserie beiträgt.

Aus der DE 196 42 820 A1 ist ein Hinterwagen, insbesondere für ein Cabriolet bekannt, das derart ausgestaltet ist, dass die Kräfte, die über das Fahrwerk eingeleitet werden und über einen Querträger in einen zentralen Kraftflussmittelpunkt weiter geleitet werden. Von dort aus werden die Kräfte in mehrere Träger, die ähnlich einer Fachwerkstruktur angeordnet sind, verteilt. Die Anordnung ist jedoch in Hinblick auf eine Gewichtsreduktion nicht optimiert.

Die Aufgabe der Erfindung besteht darin, eine Trennanordnung eines Kraftfahrzeug-Heckraums derart zu gestalten, dass die Karosseriesteifigkeit gegenüber dem Stand der Technik bei gleichzeitiger Massereduktion erhöht wird.

Die Lösung der Aufgabe besteht in den Merkmalen des Anspruchs 1.

Die erfindungsgemäße Trennanordnung nach Anspruch 1 ist im vorderen Teil eines Heckraums eines Kraftfahrzeuges lösbar montiert. Sie dient unter anderem zur Abtrennung eines Tankraums vom Heckraum. Die Positionierung der Trennanordnung ist derart gestaltet, dass sie bezüglich einer senkrechten Fahrzeugquerebene (SFQ) und einer waagrechten Fahrzeugquerebene (WFQ) gewölbt ist. Bevorzugt ist die Trennanordnung bezüglich dieser Ebenen konkav gewölbt, bei entsprechender Raumverteilung zwischen Tankraum und Heckraum kann jedoch auch eine konvexe Wölbung zweckmäßig sein. Durch die Wölbung wird die Karosseriesteifigkeit gegenüber dem Stand der Technik erhöht.

Ein weiteres erfindungsgemäße Merkmal besteht darin, dass die Trennanordnung entlang der berechneten Kraftflusslinien eine erhöhte Materialstärke aufweist. Entsprechend kann außerhalb der Kraftflusslinien Material eingespart werden, was zur Gewichtsreduktion bei gleichzeitiger Erhöhung der Steifigkeit führt. Die Kraftflusslinien werden für die entsprechende Karosserie an Hand von Standardbelastungsfällen (z. B. Torsion und Biegung der Karosserie) mit Hilfe der finiten Elemente Methode berechnet. Der Verlauf der Kraftflusslinien wird auf entsprechend der Erfindung auf die Trennanordnung angewandt.

In einer weiteren vorteilhaften Ausgestaltung weist die Trennanordnung an ihren Rändern Befestigungsflächen auf, die annähernd parallel zur senkrechten oder waagrechten Fahrzeugquerebenen ausgebildet sind. Dies führt zu einem höheren Toleranzausgleich in zwei Raumrichtungen bei der Montage des Karosserierohbaus (Anspruch 2).

Die Anwendung von Langlöchern in den Befestigungsebenen führt zusätzlich zu einem Toleranzausgleich in die dritte Raumrichtung (Anspruch 3).

Die Trennanordnung ist vorzugsweise direkt an der Fahrzeugkarosserie durch Verschraubung befestigt. Auf Zusatzelemente wie Winkelstücke und Schienen kann verzichtet werden. Die Anzahl der Schrauben wird reduziert. Diese Maßnahme trägt zur Gewichtsreduktion bei (Anspruch 4).

Eine weitere Gewichtsreduktion kann erfolgen, indem man die Trennanordnung in einem Leichtmetallguss, insbesondere Druckguss herstellt. Unter Druckguss wird hierbei alle Arten des Gießens in eine Dauergießform bei erhöhtem Druck verstanden, z. B. Druckguss, Squeeze Casting, Thixocasting, Thixomolding, Varioguss oder Niederdruck-Kokillenguss. Sandgussverfahren oder Schwerkraft-Kokillenguss sind möglich, unter Kostenaspekten jedoch nicht immer zweckmäßig.

Durch die genannten Gießverfahren ist es möglich, die erfindungsgemäße Trennanordnung aus Leichtmetallen darzustellen und insbesondere die Wandstärken erfindungsgemäß zu variieren. Dies führt zu einem geringeren Bauteilgewicht und zu höherer Karosseriesteifigkeit. Als Gießmetalle eignen sich Aluminiumlegierung und Magnesiumlegierung wie die sogenannte AZ91 (Anspruch 5).

Ebenfalls zur Gewichtreduzierung trägt es bei, die Wandstärken zwischen den Verstärkungsstreben so dünn wie möglich zu gestalten, d. h., so dünn, wie es die aktuelle Gießtechnik zuläßt. An den besagten Stellen beträgt die Wandstärke ca. 1,5 mm oder weniger. Gießtechnisch sind derzeit 1,2 mm Wandstärke zuverlässig darstellbar (Anspruch 6).

Besonders zweckmäßig in Hinblick auf die Gewichtsreduktion ist es, die Bereiche zwischen den Verstärkungsstreben materialfrei auszugestalten. Hierzu wird jedoch ein zusätzlicher Arbeitsgang und eventuell ein zusätzliches Stanzwerkzeug benötigt. Die Zweckmäßigkeit dieser Maßnahme wird im Einzelfall durch eine Kosten-Nutzen-Analyse berechnet (Anspruch 7).

Eine lösbare Befestigung der Trennanordnung ermöglicht Wartungsarbeiten in einem von der Trennanordnung verdeckten Tankraum (Anspruch 8).

Bevorzugte Ausgestaltungsformen der Erfindung sind in den folgenden Figuren dargestellt.

Es zeigen:
- **Fig. 1**: den Heckwagen einer selbstragenden Karosserie mit einer Trennanordnung in perspektivischer Ansicht,
- **Fig. 2**: eine perspektivische Ansicht einer Trennanordnung.

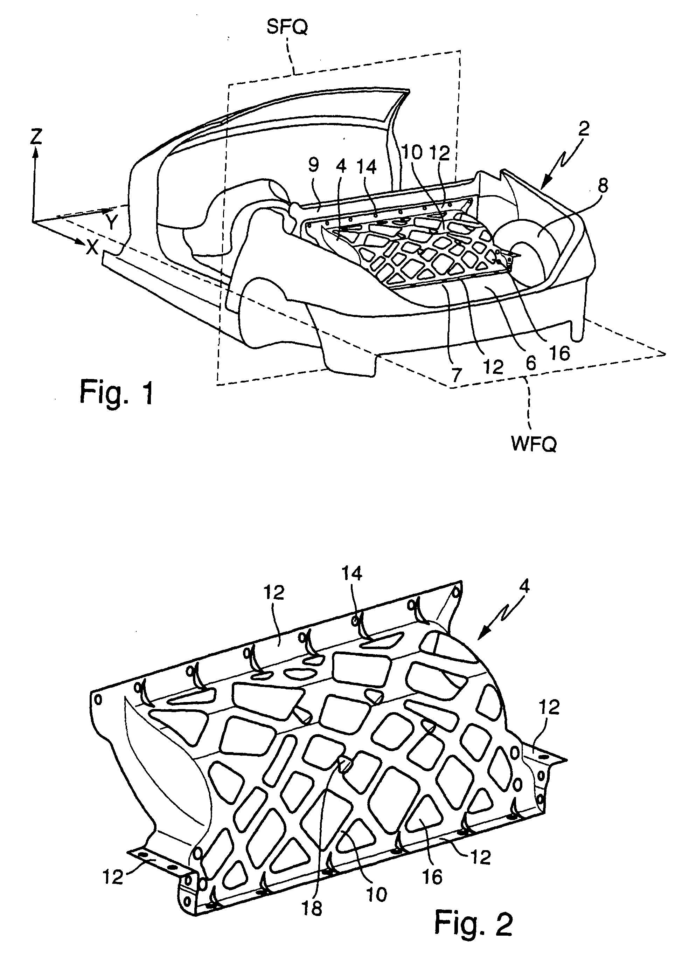

Der in **Fig. 1** dargestellte Ausschnitt einer selbstragenden Karosserie 2 umfasst einen Heckraum 6, der durch eine Trennanordnung 4 von einem nicht näher dargestellten Tankraum getrennt ist. Die Trennanordnung 4 erstreckt sich von einem Boden 7 des Heckraums 6 bis zu einem Querträger 9 und zwischen zwei Radhäusern 8, von denen in der perspektivischen Darstellung nur das rechte sichtbar ist. Die Trennanordnung 4 weist bezüglich einer waagrechten Fahrzeugquerebene WFQ und einer senkrechten Fahrzeugquerebene SFQ eine Wölbung auf.

Eine detaillierte Darstellung der Trennanordnung 4 wird durch die **Fig. 2** gegeben. Die Wölbung der Trennebene ist bezüglich der WFQ und der SFQ konkav ausgebildet, was eine Vergrößerung des Tankraums bewirkt. Die Trennanordnung 4 weist Verstärkungsstreben 10 auf, die den vom Fahrzeugtyp abhängigen Kraftflussrichtungen entsprechen.

Bei den Verstärkungsstreben 10 handelt es sich um Materialverstärkungen gegenüber der übrigen Wandstärke. Die Materialverstärkung lassen sich sehr gut in einem Gießprozess darstellen, da durch das Formwerkzeug lokal höhere Wandstärken abgebildet werden können. Die Verstärkungsstreben 10 weisen einen Querschnitt auf, dessen Breite zu Höhe Verhältnis größer als 1 ist, bevorzugt ist dieses Verhältnis größer als 4. Die Verstärkungsstreben 10 sind somit als flach zu bezeichnen, was sich vorteilhaft bei ihrem Verlauf über die Wölbung auswirkt. Hohe Verstärkungsstreben würden im Belastungsfall Gefahr laufen, über der Wölbung abzuknicken.

Zwischen Verstärkungsstreben 10 befinden sich Aussparungen 16, die nach einem Herstellungsprozess durch Druckguss aus der Trennanordnung 4 mechanisch herausgearbeitet werden. Die Aussparungen 16 sind hierbei in den Figuren 1 und 2 rein exemplarisch. Durch diese Darstellung werden lediglich die Verstärkungsstreben 10 deutlicheren hervorgehoben. Erfindungsgemäß können die Zwischenräume zwischen den Verstärkungsstreben 10 ebenso mit Material von dünner Wandstärke, bevorzugt von 1,5 mm oder weniger bestehen.

Zur Montage weist die Trennanordnung 4 Befestigungsflächen 12 auf, die bezüglich der WFQ und der SFQ annähernd parallel verlaufen. Diese sogenannten netzparallelen Flächen 12 ermöglichen einen Toleranzausgleich während der Montage in eine x-und z-Richtung (siehe Koordinatenkreuz in Fig. 1). In die Befestigungsflächen 12 sind Langlöcher 14 eingelassen, die einen zusätzlichen Toleranzausgleich in y-Richtung zulassen.

Durch die beschriebene Anordnung der Befestigungsflächen 12 und der Langlöcher 14 ist es möglich, auf weitere Hilfsmittel zur Befestigung der Trennanordnung 4 zu verzichten. Die Trennanordnung 4 wird direkt an der Karosserie 2 festgeschraubt. Eine feste Verbindung zwischen Trennanordnung 4 und Karosserie 2 ist denkbar, in den meisten Fällen nicht zweckmäßig, da der Tankraum zugänglich sein sollte.

Die Trennanordnung in Fig. 2 weist zusätzlich Montagevorrichtungen 18 zur Integration von elektronischen Komponenten auf. Die Montagevorrichtungen 18 sind in Form von Erhöhungen ausgestaltet, die bereits während des Gießprozesses durch Schieber mit Bohrungen versehen werden können. Durch diese Maßnahme kann auf zusätzliche Befestigungshilfsmittel und das Anbringen von Bohrungen verzichtet werden, was zusätzliche Arbeitsschritte, Materialkosten und Gewicht einspart. Die Montagevorrichtung sind derart gestaltet, dass die gewünschte Positionierung der elektronischen Komponenten gewährleistet ist.

## Patentansprüche

1. Selbsttragende Karosserie (2) eines kraftwagens mit einer am vorderen Ende eines Heckraums (6) angeordneten Trennanordnung (4), die sich in Fahrzeugquerrichtung sowie über einen Teil ihrer Höhe zwischen hinteren Radhäusern (8) des Kraftwagens erstreckt und an Begrenzungswänden des Heckraums (6) befestigt ist, wobei die Trennanordnung (4) als für die Karosserie (2) gegen Verwindung aussteifende Stützeinrichtung ausgebildet ist,
**dadurch gekennzeichnet,**
**dass** die Trennanordnung (4) bezüglich einer senkrechten Fahrzeugquerebene (SFQ) und einer waagrechten Fahrzeugquerebene (WFQ) konkav gewölbt ist und den Heckraum (6) von einem Tankraum abtrennt, wobei die Trennanordnung (4) entlang von berechneten Kraftflusslinien Verstärkungsstreben (10) in Form höherer Materialdicke aufweist.

2. Trennanordnung nach Anspruch 1,
**dadurch gekennzeichnet,**
**dass** die Trennanordnung (4) bezüglich der senkrechten Fahrzeugquerebene (SFQ) und bezüglich einer waagrechten Fahrzeugquerebene (WFQ) parallele Befestigungsflächen (12) aufweist.

3. Trennanordnung nach Anspruch 2,
**dadurch gekennzeichnet,**
**dass** die Befestigungsflächen (12) mit Langlöchern (14) versehen sind.

4. Trennanordnung nach einem der Ansprüche 1 bis 3,
**dadurch gekennzeichnet,**
**dass** die Trennanordnung (4) direkt an der Fahrzeugkarosserie (2) befestigt ist.

5. Trennanordnung nach einem der Ansprüche 1 bis 4,
**dadurch gekennzeichnet,**
**dass** die Trennanordnung (4) aus Leichtmetall-Druckguss, insbesondere Magnesium-Druckguss dargestellt ist.

6. Trennanordnung nach einem der Ansprüche 1 bis 5,
**dadurch gekennzeichnet,**
**dass** die Wandstärke zwischen den Verstärkungsstreben (10) weniger als 1,5 mm beträgt.

7. Trennanordnung nach einem der Ansprüche 1 bis 5,
**dadurch gekennzeichnet,**
**dass** die Bereiche zwischen den Verstärkungsstreben (10) ausgespart sind.

8. Trennanordnung nach einem der Ansprüche 1 bis 7,
**dadurch gekennzeichnet,**
**dass** die Trennanordnung (4) an der Karosserie (2) lösbar befestigt ist.

## Claims

1. Unitised body (2) of a motor vehicle, with a separating arrangement (4) located at the front end of a rear compartment (6), which extends in the transverse direction of the vehicle and, over part of its height, between the rear wheel housings (8) of the motor vehicle and is attached to the boundary walls of the rear compartment (6), the separating arrangement (4) being designed as a supporting device reinforcing the body against torsional flexing,
**characterised in that**
the separating arrangement (4) is concave with regard to a vertical transverse plane of the vehicle (SFQ) and a horizontal transverse plane of the vehicle (WFQ) and separates the rear compartment (6) from a tank compartment, wherein the separating arrangement (4) is provided with reinforcing braces (10) in the form of higher material thickness along calculated power flow lines.

2. Separating arrangement according to claim 1,
**characterised in that**
the separating arrangement (4) has parallel mounting surfaces (12) with regard to the vertical transverse plane of the vehicle (SFQ) and a horizontal transverse plane of the vehicle (WFQ).

3. Separating arrangement according to claim 2,
**characterised in that**
the mounting surfaces (12) are provided with slots (14).

4. Separating arrangement according to any of claims 1 to 3,
**characterised in that**
the separating arrangement (4) is directly mounted on the vehicle body (2).

5. Separating arrangement according to any of claims 1 to 4,
**characterised in that**
the separating arrangement (4) is made of a die-cast light alloy, in particular of a die-cast magnesium alloy.

6. Separating arrangement according to any of claims 1 to 5,
**characterised in that**
the wall thickness between the reinforcing braces (10) is less than 1.5 mm.

7. Separating arrangement according to any of claims 1 to 5,
**characterised in that**
the areas between the reinforcing braces (10) are recessed.

8. Separating arrangement according to any of claims 1 to 7,
**characterised in that**
the separating arrangement (4) is detachably mounted on the body (2).

## Revendications

1. Carrosserie auto-porteuse (2) d'un véhicule automobile comprenant un dispositif de séparation (4) disposé sur l'extrémité avant d'un espace arrière (6), qui s'étend dans la direction transversale du véhicule ainsi que sur une partie de sa hauteur entre les logements de roue arrière (8) du véhicule et est fixé aux parois de délimitation de l'espace arrière (6), le dispositif de séparation (4) étant conçu comme dispositif de support renforçant la carrosserie (2) contre une déformation, **caractérisée en ce que** le dispositif de séparation (4) est courbé de façon concave par rapport à un plan transversal vertical de véhicule (TVV) et un plan transversal horizontal de véhicule (THV) et sépare l'espace arrière (6) d'un espace de réservoir, le dispositif de séparation (4) comprenant le long de lignes de flux de force calculées des entretoises de renfort (10) prenant la forme d'une épaisseur de matériau plus importante.

2. Dispositif de séparation selon la revendication 1, **caractérisé en ce que** le dispositif de séparation (4) comprend des surfaces de fixation (12) parallèles par rapport au plan transversal vertical du véhicule (TVV) et par rapport à un plan transversal horizontal du véhicule (THV).

3. Dispositif de séparation selon la revendication 2, **caractérisé en ce que** les surfaces de fixation (12) sont pourvues de trous oblongs (14).

4. Dispositif de séparation selon l'une des revendications 1 à 3, **caractérisé en ce que** le dispositif de séparation (4) est fixé directement à la carrosserie de véhicule (2).

5. Dispositif de séparation selon l'une des revendications 1 à 4, **caractérisé en ce que** le dispositif de séparation (4) est fabriqué par moulage sous pression d'un métal léger, en particulier par moulage sous pression de magnésium.

6. Dispositif de séparation selon l'une des revendications 1 à 5, **caractérisé en ce que** l'épaisseur de paroi entre les entretoises de renfort (10) mesure moins de 1,5 mm.

7. Dispositif de séparation selon l'une des revendications 1 à 5, **caractérisé en ce que** les zones entre les entretoises de renfort (10) sont évidées.

8. Dispositif de séparation selon l'une des revendications 1 à 7, **caractérisé en ce que** le dispositif de séparation (4) est fixé de manière amovible à la carrosserie (2).
